Europäisches Patentamt

European Patent Office

Office européen des brevets

(11) Veröffentlichungsnummer : **0 050 108**
**B1**

(12) EUROPÄISCHE PATENTSCHRIFT

(45) Veröffentlichungstag der Patentschrift :
07.12.83

(51) Int. Cl.³ : **B 01 J   8/14**, F 26 B  17/10,
**B 04 C   1/00**

(21) Anmeldenummer : 80900678.6

(22) Anmeldetag : 18.04.80

(86) Internationale Anmeldenummer :
PCT/EP 80/00022

(87) Internationale Veröffentlichungsnummer :
WO WO/81029 (29.10.81 Gazettee 81/25)

(54) VERFAHREN UND VORRICHTUNG ZUR KONTINUIERLICHEN DURCHFÜHRUNG VON CHEMISCHEN ODER PHYSIKALISCHEN REAKTIONEN ZWISCHEN GASEN UND FESTSTOFFEN.

(43) Veröffentlichungstag der Anmeldung :
28.04.82 Patentblatt 82/17

(45) Bekanntmachung des Hinweises auf die Patenterteilung : 07.12.83 Patentblatt 83/49

(84) Benannte Vertragsstaaten :
AT CH FR GB LI LU NL SE

(56) Entgegenhaltungen :
CH-A-  520 308
DE-A- 2 634 513
DE-B- 1 067 786
DE-B- 1 215 058
FR-A- 2 211 295
FR-E-     31 716
US-A- 3 945 130
US-A- 3 958 342

(73) Patentinhaber : **BUSS AG**
**Barfüsserplatz 6**
**CH-4051 Basel (CH)**

(72) Erfinder : **MATTER, Marcel**
**Höhenweg 12**
**CH-4133 Pratteln (CH)**

(74) Vertreter : **Rottmann, Richard, Dipl.-Ing.**
**Rottmann Patentanwälte AG Dufourstrasse 101**
**CH-8008 Zürich (CH)**

Verfahren und Vorrichtung zur kontinuierlichen Durchführung von chemishen oder physikalischen Reaktionen zwischen Gasen und Feststoffen

Die vorliegende Erfindung betrifft ein Verfahren zur Durchführung von chemischen und physikalischen Reaktionen zwischen Gasen und Feststoffen, sowie eine Vorrichtung zur Ausübung des Verfahrens. Das Verfahren und die Vorrichtung eignet sich auch zur Hochtemperaturbehandlung von Feststoffen, zur Kalzination, zum Trocknen, Kühlen oder Erwärmen. Gemäß dem Verfahren werden die Teilchen in einer flachen mehrstufigen Wirbelkammer bewegt in der die Hauptströmungen als flache Ringströme verlaufen.

Bekannte Anlagen sind in der US-A 3 755 913 und im Artikel von H. Koller in der Chemiker Zeitung 95, Jahrgang (1971), No. 12 beschrieben. Ein etwas anderes Verfahren beschreibt L. M. Kochetov et al. in Khimicheskoe i Neftyanoe Mashinostroenie, No. 2 (Feb. 1969). Beide Verfahren haben jedoch folgende Nachteile :

Relativ kurze Verweilzeit, stärkere Beeinflussung durch thermische Abstrahlung oder Einstrahlung, grössere Fördergasmengen die nicht für die Reaktion voll genutzt werden, falls sie nicht im Umlauf rückgeführt werden können, sowie relativ grosser apparativer Aufwand und Platzbedarf wenn einzelne Apparate zu Kaskaden vereint eingesetzt werden um etwas längere Verweilzeiten zu erzielen und die Feststoffaufkonzentrierung zu verbessern.

Zweck der Erfindung ist ein Verfahren und eine Vorrichtung zur Ausübung des Verfahrens vorzuschlagen, bei welchen die oben erwähnten Nachteile weitgehend vermieden werden können.

Dabei wird von einem Verfahren zur kontinuierlichen Durchführung von chemischen- und physikalischen Reaktionen zwischen Gasen und Feststoffen ausgegangen, bei welchem Wärme zu- oder abgeführt werden muss, mit einem Gasstrom, der gleichzeitig Gutträger ist. Der Gutstrom wird dabei in eine zylindrische Kammer mit waagrechter Achse und parallel ebenen Seitenwänden tangential eingeführt und zentral abgeführt, wobei in der Kammer ein der Kammerwand entlang rotierender Teilchenring entsteht. Erfindungsgemäss wird nun der parallel zu den Seitenwänden ausgerichtet rotierende Teilchenring in mehrere konzentrisch rotierende Materialringe aufgeteilt, in dem jeweils ein Teil in zentraler Richtung abgelenkt und der verbleibende Teil mit dem neu zugeführten Trägerstrom vermischt wird, wobei die innen kreisenden Teilchen in den abgehenden Trägerstrom abgelenkt werden.

Dieses Verfahren wird an einer Vorrichtung durchgeführt, welche eine zylindrische Kammer mit waagrechter Achse, tangentialem Einlass und zentralem Auslass für den Gasgutstrom besitzt. Die zylindrische Kammer wird erfindungsgemäss durch zylindrische Trennbleche, in kozentrische im wesentlichen gleich breite Ringräume aufgeteilt, die miteinander in Verbindung stehen, wobei die Trennbleche zur Bildung von Einlanfstellen je eine Unterbrechung aufweisen, welche Unterbrechungen radial gleich ausgerichtet sind. In dieser Weise ergibt sich eine sehr grosse Wärmeaustauschfläche bei kleinen Abmessungen, wobei die Verweilzeit vorteilhaft verlängert wird. Der apparative Aufwand und die Anlagekosten werden wesentlich vermindert. Falls die Trennbleche noch zusätzlich beheizt oder gekühlt werden, so kann der Wärmeaustausch weiter intensiviert und die Reaktion präzis gesteuert werden.

Ein Ausfühzungsbeispiel der Vorrichtung ist auf beiliegender Zeichnung dargestellt und zwar zeigen :

Figur 1   einen schematischen Vertikalschnitt durch die Vorrichtung,

Figur 2   einen Schnitt gemäss der Linie A-A in der Fig. 1,

Figur 3   einen schematischen Vertikalschnitt gemäss einer Variante der Vorrichtung, und

Figur 4   einen Schnitt gemäss der Linie B-B in der Fig. 3.

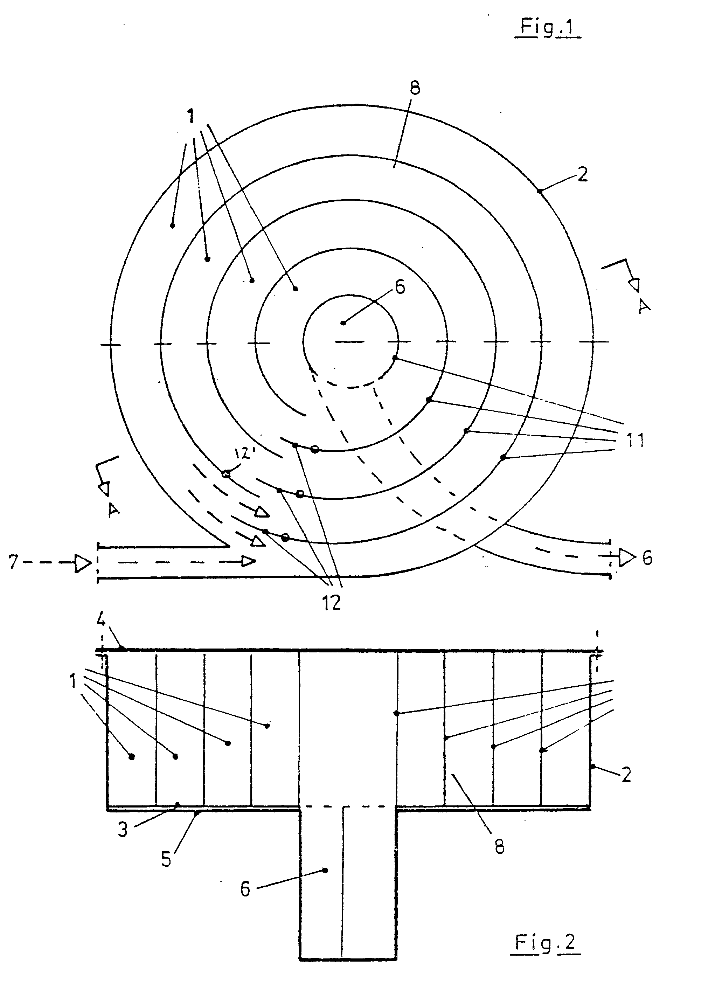

Die in den Fig. 1 und 2 dargestellte Vorrichtung weist eine flache zylindrische Kammer 8 mit waagrechter Achse auf, welche Kammer 8 eine ringförmige Seitenwand 2 und einen kreisförmigen Boden 5 mit zentralem, horizontalem Ablaufrohr 6 besitzt. Zum Verschliessen der Kammer 8 dient ein Deckel 4. Ferner ist die Kammer 8 mit einem tangentialen Zulauf 7 ausgerüstet, welcher sich über die ganze Breite der Kammer 8 erstreckt.

Ueber dem Boden 5 befindet sich ein auswechselbarer Einsatzboden 3, welcher vier zylindrische, blechförmige Trennwände 11 trägt, welche beim Anziehen des Deckels 4 in der Kammer 8 unverrückvar festgehalten werden. Die Trennwände teilen das Innere der Kammer 8 in vier Ringkanäle 1, die konzentrisch zueinander verlaufen und untereinander in Verbindung stehen. Zu diesem Zwecke ist die über der horizontalen Mittelebene liegende Hälfte jeder der Trennwände 11 genau halbkreisförmig ausgebildet, während die unteren Hälften derselben unterbrochen sind und spiralförmig verlaufen. Die Unterbruchstellen liegen im Bereiche einer Radialebene der Kammer, welche ca. 180° (im Uhrzeigersinne) mit der Horizontalebene einschliesst und auch in der Nähe der tangentialen Einmündung des Zulaufes 7 liegt. Die im Uhrzeigersinne liegenden Enden der Trennwände 11 weisen je eine radial nach aussen gebogene Verlängerung in der Form von Leitzungen 12 auf, die so gerichtet sind, dass sie gegen die Mitte des benachbarten Ringkanals 1 weisen. Diese sind durch Biegung verstellbar und erlauben eine feine Regulierung der Einlaufbreite der Kanäle 1 an den Einlaufstellen. Gegebenenfalls können auch die anderen Enden der Trennwände 11 mit Leitzungen ausgerüstet sein, wie dies bei 12' angedeutet ist. Die Leitzungen 12 bzw. 12' können auch gelenkig befestigt und während des Betriebes verstellbar sein.

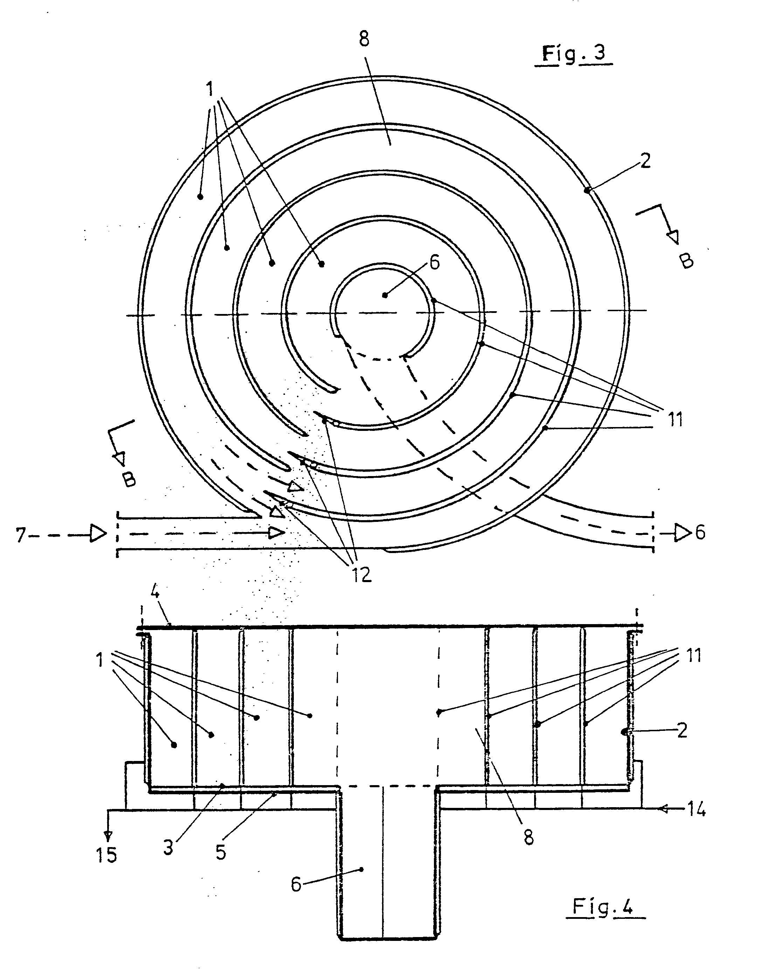

Fig. 3 und 4 zeigen eine Variante bei der die Kammerwand 2, der Kammerboden 5 und das Ablaufrohr 6 mit Heizmänteln ausgerüstet sind. Auch die Trennwände 11 sind doppelwandig ausgeführt und können nach Bedarf geheizt oder gekühlt werden. Der Zulauf des Wärmeträgers ist schematisch bei 14 angedeutet, der Ablauf erfolgt bei 15.

Das vorgeschlagene Verfahren wird beispielsweise wie folgt ausgeführt:

Das mit feuchten Materialteilchen beladene Gas wird in den tangentialen Zulauf 7 hineingepresst. Durch die Umlenkung an der gekrümmten Kammerwand 2 erhöht sich die Strömungs-Geschwindigkeit und es bildet sich ein nahezu ebener Ring rotierender Teilchen, da die schweren, feuchten Materialteilchen infolge der Trägheit ihre hohe Geschwindigkeit beibehalten und infolge der Fliehkraft den grösstmöglichen Radius für ihre Kreisbahn suchen. Während ihrer kreisenden Bewegung treten sie in Wärmeaustausch mit dem heissen Trägergas, trocknen dabei und werden demzufolge leichter. Die kontinuierlich neu einströmenden, nassen und schweren Teilchen mischen und verdrängen die leichter werdenden Teilchen auf weiter innen liegende Bahnen (siehe Pfeile). Der gleiche Vorgang erfolgt auch dann, wenn die Teilchen nicht leichter werden, aber in Folge einer Reaktion ein lockeres Gefüge erhalten. Der rotierende Teilchenring wird in mehrere konzentrische Ringe aufgeteilt, indem die auf der Innenbahn des ersten Ringkanals 1 kreisenden Teilchen durch die Lücke der Trennwand 11 in die äussere Kreisbahn des nächst inneren Ringkanals übertreten und sich mit dem dort kreisenden Material mischen. Erneut werden lockerer gewordene Teilchen auf die Innenbahn gedrängt und durch die entsprechend eingestellten Leitzungen 12 vom vorhergehenden Ringstrom abgeschält und dem nachfolgenden äusseren Ringstrom zugemischt. Der Vorgang wiederholt sich bis in den innersten Ringkanal aus dem die Teilchen mit dem Gasstrom über das Ablaufrohr 6 gelangen und getragen werden.

## Ansprüche

1. Verfahren zur kontinuierlichen Durchführung von chemischen oder physikalischen Reaktionen zwischen Gasen und Feststoffen, bei denen Wärme zu- oder abgeführt werden muss, mit einem Gasstrom, der gleichzeitig Gutträger ist und in eine zylindrische Kammer mit waagrechter Achse und parallel ebenen Seitenwänden tangential eingeführt und zentral abgeführt wird, wobei in der Kammer ein der Kammerwand entlang rotierender Teilchenring entsteht, dadurch gekennzeichnet, dass der parallel zu den Seitenwänden ausgerichtet rotierende Teilchenring in mehrere konzentrisch rotierende Ringe aufgeteilt wird, indem jeweils ein Teil in zentraler Richtung abgelenkt und der verbleibende Teil mit dem neu zugeführten Trägerstrom vermischt wird, wobei die innen kreisenden Teilchen in den abgehenden Trägerstrom abgelenkt werden.

2. Vorrichtung zur kontinuierlichen Behandlung, z. B. Trocknung oder Kühlung von teilchenförmigen Materialien mittels Wärmeaustausch mit einem Gasstrom, der gleichzeitig Gutträger ist, in einer zylindrischen Kammer mit waagrechter Achse, tangentialem Einlass und zentralem Auslass für den Gasgutstrom, dadurch gekennzeichnet, dass die zylindrische Kammer durch zylindrische Trennbleche in konzentrische im wesentlichen gleich breite Ringräume aufgeteilt ist, die miteinander in Verbindung stehen, wobei die Trennbleche zur Bildung von Einlaufstellen je eine Unterbrechung aufweisen, welche Unterbrechungen radial gleich ausgerichtet sind.

3. Vorrichtung nach Anspruch 2, dadurch gekennzeichnet, dass jedes Trennblech im Bereiche der Unterbrechung mit einer verstellbaren Leitzunge ausgerüstet ist, welche gegen die Mitte des benachbarten Ringkanals gerichtet ist.

4. Vorichtung nach den Ansprüchen 2 und 3, dadurch gekennzeichnet, dass die Seitenwand (2), der Boden (5) und das Ablaufrohr (6) der Kammer (8) mit Heizmänteln ausgerüstet sind.

5. Vorrichtung nach den Ansprüchen 2-4, dadurch gekennzeichnet, dass die Trennwände (11) doppelwanding ausgeführt, heiz- oder kühlbar ausgebildet sind.

## Claims

1. A method of continuously performing chemical or physical reaction between gases and solids, in which heat is to be supplied or removed with a gas stream which simultaneously acts as a material carrier and is tangentially fed into a cylindrical chamber having a horizontal axis and parallel flat side walls and is removed centrally of the chamber, the chamber containing a particle ring which rotates along one chamber wall, characterized in that the particle ring rotating parallel to the side walls is divided into a plurality of concentrically rotating rings by deflecting one part of each ring towards the centre of the chamber and mixing the remaining part with the incoming carrier stream, the inwardly rotating particles being directed into the outgoing carrier stream.

2. Apparatus for the continuous treatment, e. g. drying or cooling, of particulate materials by means of heat exchange with a gas stream simultaneously acting as a material carrier, comprising a cylindrical chamber with a horizontal axis, a tangential inlet and a central outlet for the gas material stream, characterized in that the cylindrical chamber is divided by cylindrical partitions into concentric annular spaces which have substantially the same width and are connected to one another, each of the partitions comprising an opening in order to form an inlet, the openings being radially aligned.

3. Apparatus as claimed in claim 2, characterized in that each partition is provided in the region of the opening with an adjustable guide tongue directed towards the centre of the adjacent annular duct.

4. Apparatus as claimed in claims 2 and 3, characterized in that the side wall (2), the base (5) and the outled tube (6) of the chamber (8) are provided with heat jackets.

5. Apparatus as claimed in claims 2-4, characterized in that the partition walls (11) are of a double-wall construction so that they may be heated or cooled.

## Revendications

1. Procédé pour effectuer en continu des réactions chimiques ou physiques entre gaz et matières solides, avec introduction ou évacuation de chaleur, comprenant un flux de gaz qui est en même temps porteur de matière et qui est introduit tangentiellement dans une chambre cylindrique ayant un axe horizontal et des parois latérales planes parallèles, et évacué centralement, avec formation d'un anneau de particules en rotation le long de la paroi de la chambre, caractérisé en ce que l'anneau de particules en rotation, orienté parralèlement aux parois latérales, est partagé en plusieurs anneaux concentriques en rotation, une partie étant chaque fois déviée en direction du centre et la partie restante étant mélangée au flux de matière arrivant, les particules en rotation à l'intérieur étant déviées vers le flux de matière sortant.

2. Dispositif pour le traitement en continu, par exemple le séchage ou le refroidissement, de matière sous forme de particules par échange de chaleur avec un flux de gaz, qui est en même temps porteur de la matière, dans une chambre cylindrique ayant un axe horizontal, une entrée tangentielle et une sortie centrale pour le flux gaz-matière, caractérisé en ce que la chambre cylindrique est partagée, par des tôles de séparation cylindriques, en espaces annulaires concentriques ayant essentiellement la même largeur et reliés les uns aux autres, les tôles de séparation ayant chacune une interruption pour former des points d'entrée, ces interruptions étant orientées radialement de la même façon.

3. Dispositif selon la revendication 2, caractérisé en ce que chaque tôle de séparation est munie, dans la région de l'interruption, d'une languette de guidage réglable qui est orientée vers le centre du canal annulaire voisin.

4. Dispositif selon les revendications 2 et 3, caractérisé en ce que la paroi latérale (2), la base (5) et le tuyau d'évacuation (6) de la chambre (8) sont munis de chemises chauffantes.

5. Dispositif selon les revendications 2-4, caractérisé en ce que les éléments de séparation (11) ont une double paroi et peuvent être chauffés ou refroidis.

Fig.1

Fig.2

0 050 108

Fig. 3

Fig. 4

2